# EUROPEAN PATENT SPECIFICATION

(11) **EP 1 270 365 B1**
(45) Date of publication and mention of the grant of the patent: **23.05.2007**
(21) Application number: 02380108.7
(22) Date of filing: 27.05.2002
(51) Int. Cl.: B62B 9/08, B62B 7/04

(54) **Child pushchair**
Kinderwagen
Voiture d'enfant

(30) Priority: 19.06.2001 ES 200101587 U
(43) Date of publication of application: 02.01.2003
(73) Proprietor: PLAY, S.A., 08184 Barcelona (ES)
(72) Inventor: Jane Stopp, Joaquin, 08184 Palau de Plegamans (ES)
(74) Representative: Ponti Sales, Adelaida

(56) References cited:
- EP-A- 1 057 709
- DE-U- 20 102 341
- DE-U- 29 622 049

## Description

This invention relates to a child pushchair of reduced length, which provides both higher stability and manoeuvrability.

Known in the state of the art are child pushchairs which include a plurality of wheels arranged in the shape of a rectangle or a triangle.

Child pushchairs having their wheels arranged in the shape of a triangle present different disadvantages. In the first place, they show limited manoeuvrability, due to the fact that in order to turn the pushchair, the front wheel has to be lifted so that the pushchair can be turned on the rear wheels. It is consequently evident that this movement requires a considerable effort given the weight of the pushchair itself and the weight of the child sitting on it.

Another important disadvantage presented by these kind of pushchairs is that they have a considerable length, thus also involving a more difficult manoeuvrability and making it not possible, by way of example, to fit the pushchair into an elevator.

DE-20102341-U discloses a retrofittable element for a three-wheeled stroller for children or dolls, with at least two wheels, which has fixing devices on bolts or studs in the parallel beam ends of the push-chair chassis, by which it can be fitted in place of the original single front wheel. It has a second sector at an angle to a first sector on the other side of a transverse fixing component.

Document US 3,679,222 discloses a stroller for small children comprising the features of the preamble of claim 1.

The child pushchair of the invention resolves said disadvantages, while presenting other advantages which shall be described below.

The child pushchair of the invention includes a structure according to claim 1.

Thanks to this feature, the child pushchair of the invention provides a higher stability because of the two wheels located at the front vertex of the triangle and, at the same time, permits a better manoeuvrability thanks to the fact that the wheels rotate around a vertical axis.

Said rotatory wheels around a vertical axis are fixed to the seat structure by means of a curved bar. Thanks to this configuration, the child pushchair has a shorter length, thereby allowing it to fit inside an elevator.

Advantageously, the child pushchair also includes means for braking.

According to a preferred embodiment, said means for braking include a lever located upon the handle, said handle being fixed to a bar including a brake shoe at one of its ends. In this way, when the lever is pulled against the strain of elastic means, the shoe enters into contact with a disc fixed to the wheel, thus braking the same.

Advantageously, the child pushchair also includes a bell.

Preferably, said bell is located upon said handle.

For a better understanding of all that has been described in this specification, some drawings are attached which, solely by way of example, show a practical case of embodiment of the child pushchair of the invention.

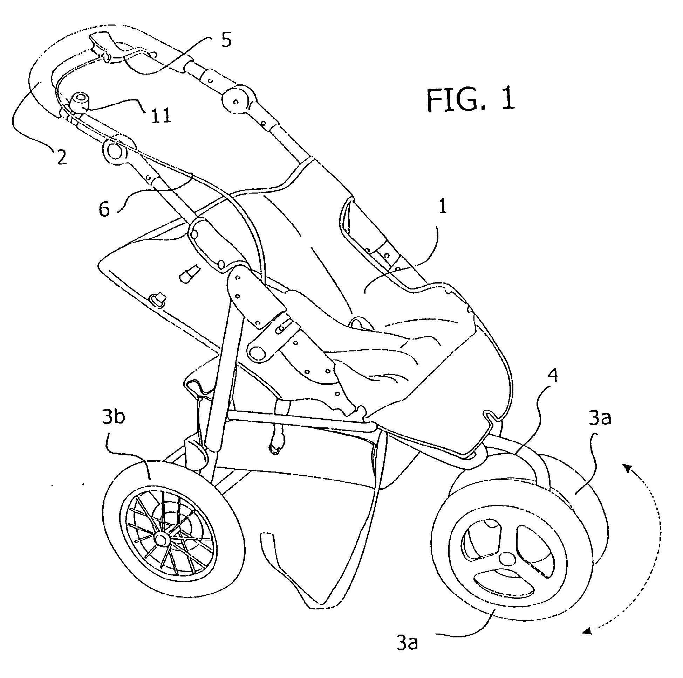

In said drawings, Figure 1 is an isometric view of the child pushchair of the present invention;
Figure 2 is a partial perspective view of the rear part of the child pushchair, where the means for braking can be appreciated; and
Figure 3 is a side elevation view of one of the wheels of the pushchair of the invention, where the means for braking can be appreciated.

As can be appreciated in figure 1, the child pushchair of the invention includes a seat structure 1, a handle 2 for pushing the same and four wheels 3a, 3b, which are arranged in the shape of a triangle, in such a way that at the front vertex of said triangle two wheels 3a are provided, one wheel next to the other.

The front wheels 3a rotate around a vertical axis, as indicated by the arrow of figure 1. This rotatory movement around a vertical axis improves the manoeuvrability of the child pushchair, thereby making it unnecessary to lift the front wheels.

Said front wheels 3a are fixed to the seat structure 1 by means of a curved bar 4 which makes it possible to reduce the length of the child pushchair.

The pushchair also includes means for braking which act upon the rear wheels 3b of the pushchair. More precisely, on the handle 2 a lever 5 is provided, which, by means of a brake cable 6, brakes the rear wheels 3b when pulled.

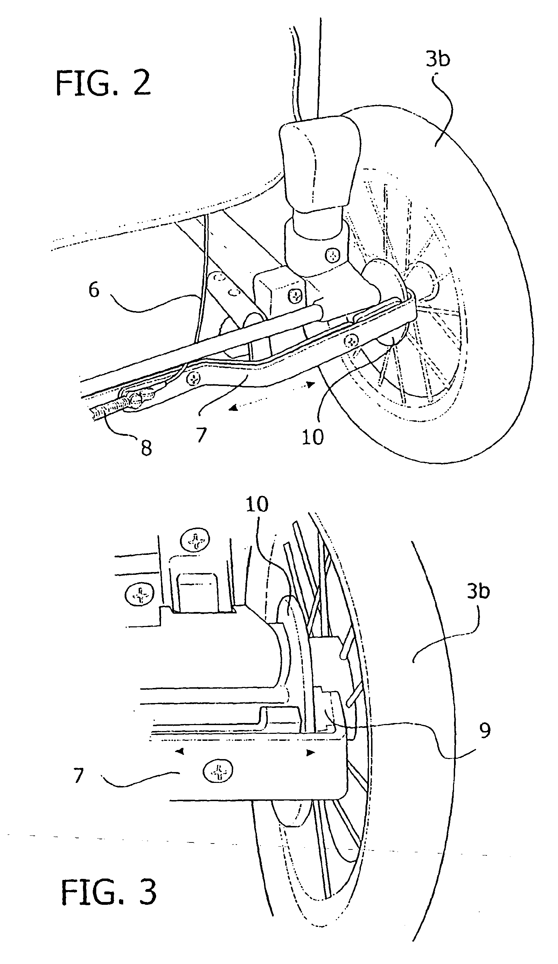

Figures 2 and 3 show how the braking of the rear wheels 3b takes place. The means for braking include a couple of bars 7 (one for each wheel 3b) associated to springs 8 and fixed to the braking cable 6. Each bar 7 includes at one of its ends a braking shoe 9 which, in braking position, is in contact with a disc 10 fixed to the wheel 3b.

In this way, when the braking lever 5 is pulled, and through the braking cable 6, the bars 7 move towards the inner part of the pushchair against the strain of the springs 8, thus provoking the shoe 9 to enter into contact with the disc 10 and consequently braking the wheel 3b.

When the braking lever 5 is released, the bars 7 move in the opposite direction due to the action of the springs 8.

The child pushchair of the invention may also include a bell 11 located upon the handle 2.

Although reference has been made to a specific embodiment of the invention, it will be clear to a person skilled in the art that the child pushchair described could be subject to many changes and modifications, and that all the details mentioned could be replaced by others that are technically equivalent, without departing from the scope of protection defined by the attached claims.

## Claims

1. Child pushchair, which includes a plurality of wheels (3a, 3b) a seat structure (1) with a support structure for supporting the seat and for ensuring a triangle position of said wheels (3a,3b) and a handle (2) for pushing said pushchair, wherein a couple of wheels (3a) are provided at the front vertex of said triangle formed by the wheels, wherein said couple of wheels (3a) have substantially the same diameter than the rear wheels (3b) **characterised in that** said support structure is completely arranged above said plurality of wheels (3a, 3b) and **in that** said couple of wheels (3a) rotates around a vertical axis and are fixed to the support structure by means of a curved bar (4).

2. Child pushchair according to claim 1, **characterised in that** it also includes means for braking.

3. Child pushchair according to claim 2, **characterised in that** said means for braking include a lever (5) located upon said handle (2), said handle being fixed to a bar (7) which includes at one of its ends a braking shoe (9), in such a way that when the lever (5) is pulled against the strain of elastic means (8), the shoe (9) enters into contact with a disc (10) joined to the wheel (3b), thus braking the same.

4. Child pushchair according to claim 1, **characterised in that** it also includes a bell (11).

5. Child pushchair according to claim 4, **characterised in that** said bell (11) is located upon the handle (2).

## Patentansprüche

1. Kinderwagen, der eine Vielzahl von Rädern (3a, 3b), eine Sitzstruktur (1) mit einer Stützstruktur zum Unterstützen des Sitzes und zum Gewährleisten einer Dreiecksposition der Räder (3a, 3b) und einen Griff (2) zum Schieben des Kinderwagens aufweist, wobei ein Räderpaar (3a) am vorderen Scheitelpunkt des von den Rädern gebildeten Dreiecks angeordnet ist, wobei das Räderpaar (3a) im Wesentlichen denselben Durchmesser wie die Hinterräder (3b) aufweist,
**dadurch gekennzeichnet, dass**
die Stützstruktur vollständig über der Vielzahl von Rädern (3a, 3b) angeordnet ist und dass das Räderpaar (3a) um eine vertikale Achse drehbar ist und mittels einer gekrümmten Stange (4) an der Stützstruktur befestigt ist.

2. Kinderwagen nach Anspruch 1, **dadurch gekennzeichnet, dass** er außerdem Mittel zum Bremsen aufweist.

3. Kinderwagen nach Anspruch 2, **dadurch gekennzeichnet, dass** die Mittel zum Bremsen einen Hebel (5) aufweisen, der auf dem Griff (2) angeordnet ist, wobei der Griff an einer Stange (7) befestigt ist, die an einem ihrer Enden einen Bremsschuh (9) aufweist, dergestalt, dass, wenn der Hebel (5) gegen die Spannung von elastischen Mitteln (8) gezogen wird, der Schuh (9) in Kontakt mit einer mit dem Rad (3b) verbundenen Scheibe (10) tritt und dieses **dadurch** bremst.

4. Kinderwagen nach Anspruch 1, **dadurch gekennzeichnet, dass** er außerdem eine Klingel (11) aufweist.

5. Kinderwagen nach Anspruch 4, **dadurch gekennzeichnet, dass** die Klingel (11) auf dem Griff (2) angeordnet ist.

## Revendications

1. Poussette, qui comporte une pluralité de roues (3a, 3b), une structure de siège (1) avec une structure support afin de supporter le siège et d'assurer un positionnement en triangle desdites roues (3a, 3b) et une poignée (2) destinée à pousser ladite poussette, dans laquelle une paire de roues (3a) est disposée au sommet avant dudit triangle formé par les roues, dans laquelle ladite paire de roues (3a) présente sensiblement le même diamètre que les roues arrières (3b), **caractérisée en ce que** ladite structure support est entièrement agencée au-dessus de ladite pluralité de roues (3a, 3b) et **en ce que** ladite paire de roues (3a) tourne autour d'un axe vertical et est fixé sur la structure support au moyen d'une barre courbe (4).

2. Poussette selon la revendication 1, **caractérisée en ce qu'**elle comporte aussi un moyen de freinage.

3. Poussette selon la revendication 2, **caractérisée en ce que** ledit moyen de freinage comporte un levier (5) situé sur ladite poignée (2), ladite poignée étant fixée sur une barre (7) qui comporte, à une de ses extrémités, un sabot de freinage (9), d'une telle manière que, lorsque le levier (5) est tiré à l'encontre d'un moyen élastique (8), le sabot (9) entre en contact avec un disque (10) relié à la roue (3b), freinant ainsi cette dernière.

4. Poussette selon la revendication 1, **caractérisée en ce qu'**elle comporte aussi une sonnette (11).

5. Poussette selon la revendication 4, **caractérisée en ce que** ladite sonnette est située sur la poignée (2).
